# EUROPÄISCHE PATENTANMELDUNG

(11) **EP 1 882 602 A2**
(43) Veröffentlichungstag der Anmeldung: **30.01.2008**
(21) Anmeldenummer: 07013754.2
(22) Anmeldetag: 13.07.2007
(51) Int. Cl.: B60G 21/055, B60G 13/00, B60G 15/06

(54) **Schwingungsdämpfer mit einem Lagerhalter**

(30) Priorität: 25.07.2006 DE 102006034858
(71) Anmelder: ZF Friedrichshafen AG, 88038 Friedrichshafen (DE)
(72) Erfinder: Pagel, Jörg, 97532 Hoppachshof (DE); Heidsieck, Knut, 32257 Bünde (DE); Nordloh, Alfons, 49429 Visbek (DE); Böttger, Chirstian, 96158 Frensdorf (DE); Stretz, Klaus, 97437 Hassfurt (DE)

(57) **Zusammenfassung**

Schwingungsdämpfer (1) mit einem Zylinder (3), zu dem ortsfest ein Lagerhalter (13) angeordnet ist, dessen Lagerung (25) eine mehrachsige Schwenkbewegung eines am Lagerhalter befestigten Bauteils (27) bezogen auf den Schwingungsdämpfer zulässt, wobei der Lagerhalter zwei Lagerstellen (19,21) für eine gemeinsame Drehachse (23) der Lagerung aufweist.

## Beschreibung

Die Erfindung betrifft einen Schwingungsdämpfer mit einem Lagerhalter gemäß dem Oberbegriff von Patentanspruch 1.

Aus der DE 198 08 021 C2 ist ein Schwingungsdämpfer in der Bauform eines Federbeins bekannt, dessen Federteller mit zwei Anschlussgewindebohrungen für ein Stabilisatorgehänge ausgeführt ist. Die beiden Anschlussgewindebohrungen dienen zur wahlweisen links- oder rechtsseitigen Montage eines Kugelgelenks, das das Stabilisatorgehänge in alle Richtungen zum Schwingungsdämpfer bewegen lässt. Nachteilig ist die Krafteinleitung von dem Kugelgelenk in den Federteller, da die auftretenden Kräfte die Anformungen am Federteller u. U. seitlich deformieren.

In der DE 42 01 837 C2 ist ebenfalls ein Federbein mit einem Federteller offenbart, wobei abweichend in einer Stirnplatte unterhalb des Federtellers eine Durchgangsöffnung zur Befestigung eines Kugelgelenks ausgeführt ist. Der Vorteil der Konstruktion besteht u. a. darin, dass es keiner links- oder rechtsseitigen Anschlussöffnung bedarf. Insgesamt liegt jedoch eine sehr aufwändige Halterung vor.

Die Aufgabe der vorliegenden Erfindung besteht darin, eine Lagerhalterung zu realisieren, die einerseits eine Winkelbeweglichkeit des angelenkten Bauteils ermöglicht und anderseits für eine gute Krafteinleitung in den Schwingungsdämpfer sorgt.

Erfindungsgemäß wird die Aufgabe dadurch gelöst, dass der Lagerhalter zwei Lagerstellen für eine gemeinsame Drehachse der Lagerung aufweist.

Der große Vorteil der Erfindung besteht darin, dass die Krafteinleitung im Vergleich zum Stand der Technik spannungsärmer ausgeführt ist.

So ist vorgesehen, dass der Lagerhalter ein u-förmiges Profil aufweist, wobei in zwei Laschen jeweils mindestens eine Lagerstelle ausgeführt ist. Die beiden Laschen ermöglichen zwei Anbindungsstellen, so dass sich im Vergleich zum Stand der Technik das Spannungsniveau halbiert.

Bei einer Ausführungsform weist der Lagerhalter eine Anschlussfläche an den Zylinder auf. Diese Variante ist sehr variabel einsetzbar, wobei der Lagerhalter selbst eine sehr einfache Form aufweist, die sich z. B. als Blechbiegeteil einfach herstellen lässt.

Zur besseren Abstützung der Kräfte ist die Anschlussfläche dem Zylinderprofil angepasst.

Des Weiteren bietet diese Variante die Möglichkeit, dass der Lagerhalter über parallel zur Längsachse des Zylinders verlaufende Schweißnähte mit dem Zylinder verbunden ist. Axial verlaufende Schweißnähte stellen eine deutlich geringere Zylinderschwächung dar als umlaufende Schweißnähte, so dass ein vergleichsweise dünnwandigerer Zylinder verwendet werden kann.

Gemäß einem vorteilhaften Unteranspruch ist die Anschlussfläche mit mindestens einer freigeschnittenen Aussparung ausgeführt. Neben einer Massenreduzierung des Lagerhalters besteht noch die Möglichkeit, dass die Ränder der Aussparung für zusätzliche Schweißverbindungen genutzt werden.

Bei einer Alternativlösung trägt der Zylinder einen Federteller, an dem die beiden Lagerstellen ausgeführt sind. Die Laschen sind bei einem Federteller aus Blech direkt gestanzt und gebogen, so dass keine zusätzlichen Schweißarbeiten notwendig sind.

Die Laschen an dem Federteller erstrecken sich in Längsrichtung des Zylinders, so dass kein zusätzlicher radialer Bauraum notwendig ist.

Anhand der folgenden Figurenbeschreibung soll die Erfindung näher erläutert werden.

Es zeigt:
- Fig. 1: Teilausschnitt von einem Schwingungsdämpfer mit eines Lagerhalters am Federteller
- Fig. 2: Perspektivische Darstellung des Federtellers der Fig. 1
- Fig. 3: Vorderansicht eines alternativen Lagerhalters am Zylinder
- Fig. 4: Draufsicht zur Fig. 3
- Fig. 5: Seitenansicht des Lagerhalters nach Fig. 3
- Fig. 6: Vorderansicht des Lagerhalters nach Fig. 3

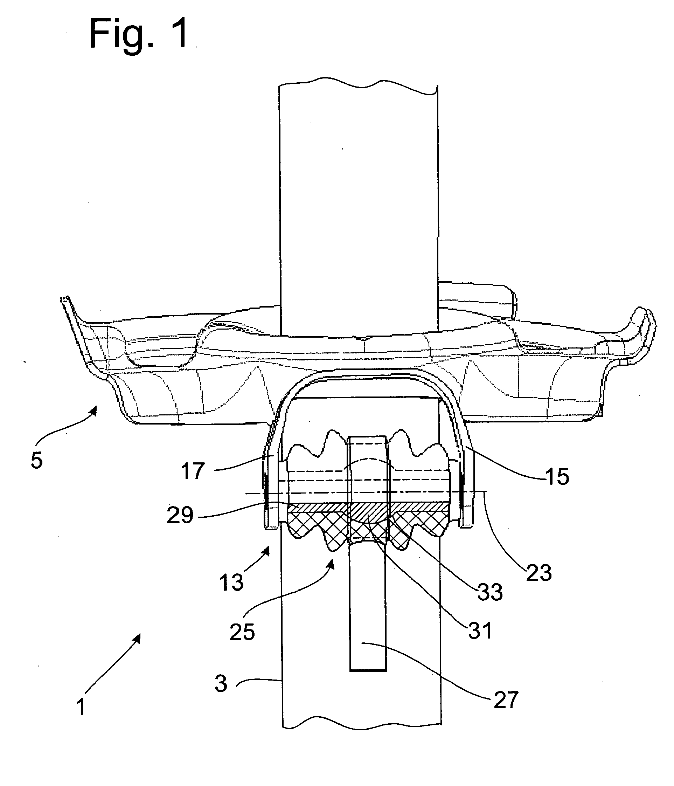

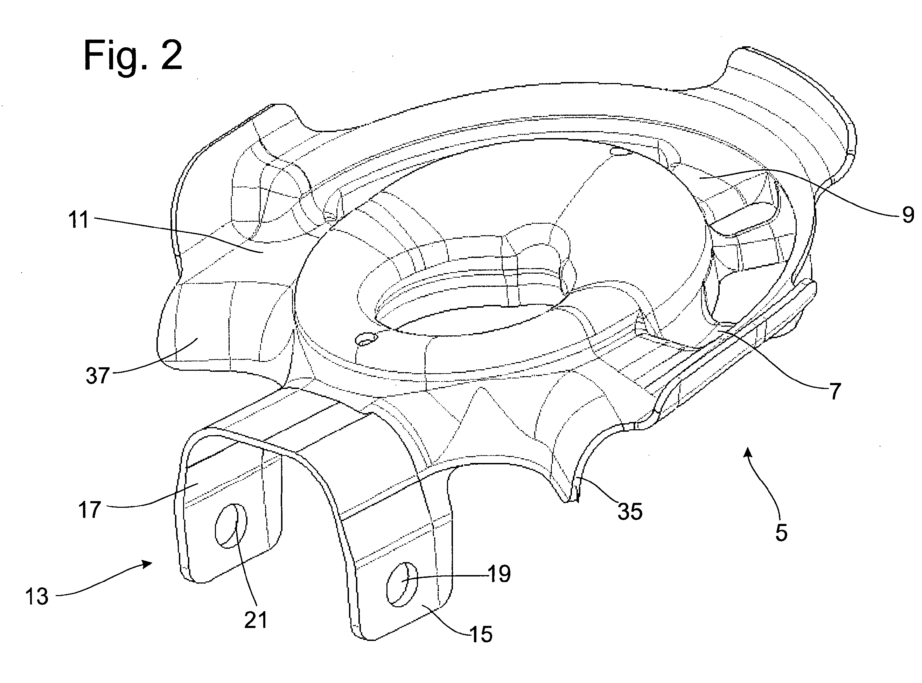

Die Figur 1 zeigt einen Ausschnitt von einem Schwingungsdämpfer 1 mit einem beliebigen inneren Aufbau. An einem äußeren Zylinder 3 ist ein Federteller 5 für eine nicht dargestellte Fahrzeugtragfeder fixiert. Der Federteller 5 verfügt über mehrere Auflageflächen 7; 9; 11 für die Endwindung der Fahrzeugtragfeder, wobei sich die Auflageflächen auf einen Teilbereich in Umfangsrichtung beschränken, da die Endwindung in der Regel nur auf einen Umfangswinkel von ca. < 300°am Federteller anliegt. In dem Teilbereich außerhalb der Auflageflächen ist einteilig mit dem Federteller ein Lagerhalter 13 ausgeführt, der, wie die Figur 2 zeigt, ein u-förmiges Profil aufweist, wobei in zwei parallelen Laschen 15; 17 jeweils mindestens eine Lagerstelle 19; 21 für eine gemeinsame Drehachse 23 einer Lagerung 25 ausgeführt ist, die eine mehrachsige Schwenkbewegung z. B. eines am Lagerhalter befestigten Stabilisators 27 bezogen auf den Schwingungsdämpfer 1 ermöglicht.

Die Laschen 15; 17 des Lagerhalters 13 erstrecken sich in Längsrichtung des Zylinders 3, so dass ein Kontakt mit der Fahrzeugtragfeder ausgeschlossen ist. Beispielhaft ist die Lagerung in der Fig. 1 teilgeschnitten dargestellt, wobei eine Lagerhülse 29 von den beiden Laschen 15; 17 gehalten wird. Die Lagerhülse 29 kann um die Drehachse 23 verschwenkt werden. Ein Kugelprofil 31 der Lagerhülse 29, an der der Stabilisator 27 angelenkt ist ermöglicht zusätzlich eine Winkelbeweglichkeit einer elastischen Kugelpfanne 33 auch quer zur Drehachse 23.

Der Federteller 5 ist im Bereich des Lagerhalters 13 freigeschnitten, um die beiden Laschen 15; 17 aus der Ebene der Auflageflächen in etwa senkrecht umbiegen zu können. An den endseitigen Rändern der Auflageflächen erstreckt sich abgewinkelte Stege 35; 37, die in die Laschen 15; 17 des Lagerhalters 13 übergehen, so dass der Lagerhalter 13 eine zusätzliche Versteifung erfährt.

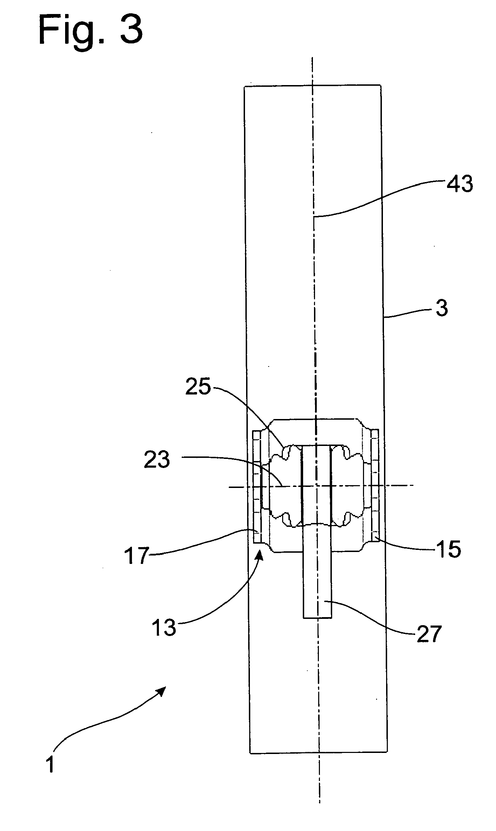

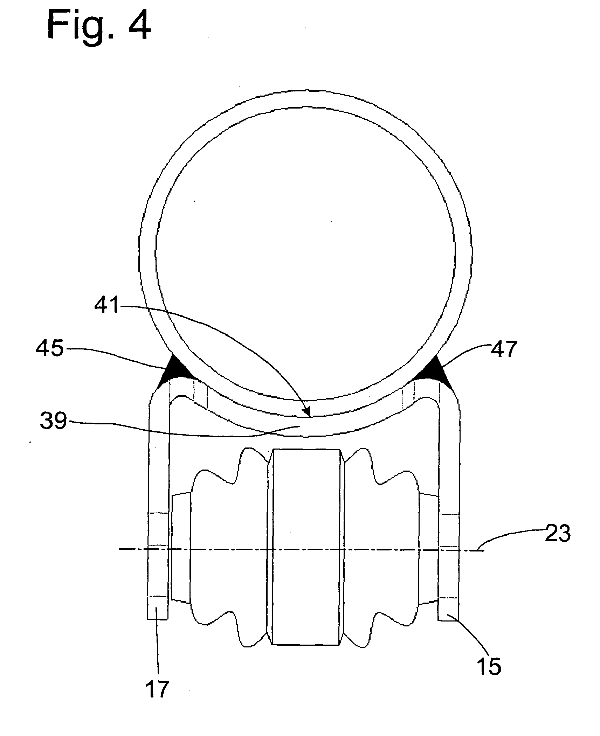

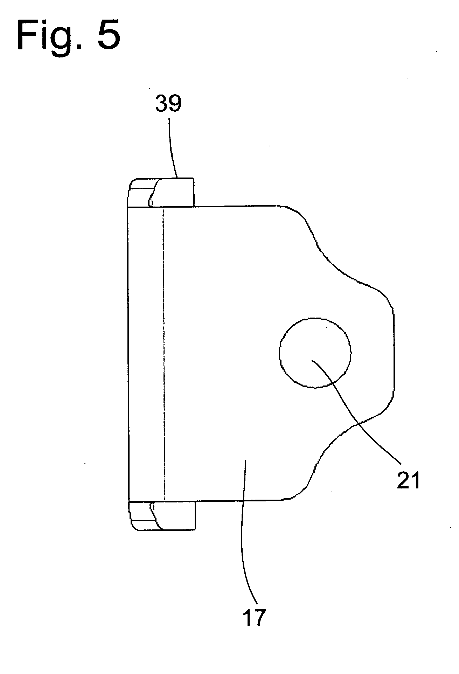

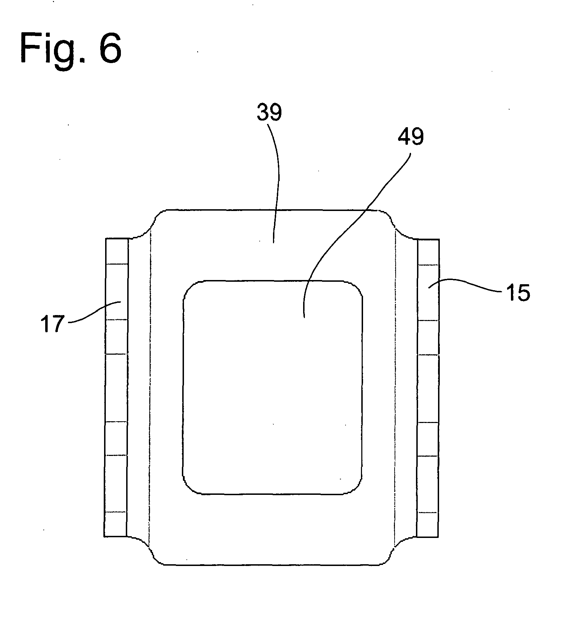

Die Zusammenschau der Fig. 3 bis 6 verdeutlicht den Aufbau einer alternativen Ausführungsform eines erfindungsgemäßen Lagerhalters 13. Der Lagerhalter 13 verfügt ebenfalls über ein u-förmiges Profil, wobei sich die Laschen 15; 17 jedoch radial zum Zylinder 3 erstrecken. Ein Grundsteg 39 des Lagerhalters 13 weist eine der Oberfläche des Zylinders angepasste Anschlussfläche 41 auf. Befestigt wird der Lagerhalter über parallel zur Längsachse 43 des Zylinders verlaufende Schweißnähte 45; 47. Neben den Schweißnähten zwischen den Laschen und dem Zylinder können auch Schweißnähte im Bereich einer fensterförmigen Aussparung 49 im Bereich der Anschlussfläche 41 ausgeführt sein.

Der innere Aufbau der Lagerstelle entspricht dem zur Fig. 1 beschriebenen.

## Patentansprüche

1. Schwingungsdämpfer (1) mit einem Zylinder (3), zu dem ortsfest ein Lagerhalter (13) angeordnet ist, dessen Lagerung (25) eine mehrachsige Schwenkbewegung eines am Lagerhalter (13) befestigten Bauteils (27) bezogen auf den Schwingungsdämpfer (1) zulässt,
**dadurch gekennzeichnet,**
**dass** der Lagerhalter (13) zwei Lagerstellen (19; 21) für eine gemeinsame Drehachse (23) der Lagerung (25) aufweist.

2. Schwingungsdämpfer nach Anspruch 1,
**dadurch gekennzeichnet,**
**dass** der Lagerhalter (13) ein u-förmiges Profil aufweist, wobei in zwei Laschen (15; 17) jeweils mindestens eine Lagerstelle (19; 21) ausgeführt ist.

3. Schwingungsdämpfer nach Anspruch 2,
**dadurch gekennzeichnet,**
**dass** der Lagerhalter (13) eine Anschlussfläche (39) an den Zylinder (3) aufweist.

4. Schwingungsdämpfer nach Anspruch 3,
**dadurch gekennzeichnet,**
**dass** die Anschlussfläche (39) dem Zylinderprofil angepasst ist.

5. Schwingungsdämpfer nach Anspruch 3,
**dadurch gekennzeichnet,**
**dass** die Anschlussfläche (39) mit mindestens einer freigeschnittenen Aussparung (49) ausgeführt ist.

6. Schwingungsdämpfer nach Anspruch 1,
**dadurch gekennzeichnet,**
**dass** der Lagerhalter (13) über parallel zur Längsachse (43) des Zylinders (3) verlaufende Schweißnähte (45; 47) mit dem Zylinder (3) verbunden ist.

7. Schwingungsdämpfer nach Anspruch 1,
**dadurch gekennzeichnet,**
**dass** der Zylinder (3) einen Federteller (5) trägt, an dem die beiden Lagerstellen (19; 21) ausgeführt sind.

8. Schwingungsdämpfer nach Anspruch 7,
**dadurch gekennzeichnet,**
**dass** sich die Laschen (15; 17) an dem Federteller (5) in Längsrichtung des Zylinders (3) erstrecken.
